# EUROPEAN PATENT APPLICATION

(11) **EP 2 353 405 A2**
(43) Date of publication of application: **10.08.2011**
(21) Application number: 11152695.0
(22) Date of filing: 31.01.2011
(51) Int. Cl.: A23L 1/30, A23L 2/52, A23D 7/005

(54) **Food supplement and production process thereof**

(30) Priority: 03.02.2010 IT BS20100017
(71) Applicant: Rizzini, Cristina, 20153 Milano (IT); Palladini, Francesco, 26010 Ricengo, Cremona (IT)
(72) Inventor: Rizzini, Cristina, 20153 Milano (IT); Palladini, Francesco, 26010 Ricengo, Cremona (IT)
(74) Representative: Chimini, Francesco

(57) **Abstract**

The procedure which envisages the steps of: preparing a first mixture by heating to a temperature of 50 to 70°C 100 parts of water having a conductivity of < 2 µS/cm, wherein the following components are solubilised in order from 0.1 to 10 parts of glycerol, and 0.01 to 5 parts of a further component chosen from among tragacanth, acacia gum, xanthan gum, cellulose of any type and their mixtures, and subsequent cooling to room temperature of the first mixture, to which 0 to 75 parts of a sweetener are added; separately preparing, at a temperature ranging from 15 to 35°C, a second mixture completely solubilising in 0.5 to 30 parts of an ethoxylated sorbitane ester from 0.001 to 5 parts of a flavouring, and from 0,1 to 50 parts of an omega-3 or omega-6 fatty acid or their mixtures; adding the second mixture to the first mixture, to obtain a combined mixture in which an oily phase is emulsified into an aqueous phase; and adding to said combined mixture a flavouring additive in the order of 1 to 50 parts and from 0.001 to 5 parts of a sweetener.

## Description

The present invention relates to the food supplement sector, in particular to compositions used as food supplements to administer the polyunsaturated fatty acids Omega-3 and Omega-6.

The term Omega-3 fatty acids (or more precisely n-3 fatty acids) indicates a family of polyunsaturated fatty acids having 16 to 24 atoms of carbon, characterised by a final carbon-carbon double bond in position n-3.

Similarly, the term Omega-6 fatty acids ( or more precisely n-6 fatty acids) indicates a family of polyunsaturated fatty acids having 18 to 22 atoms of carbon, characterised by a final carbon-carbon double bond in position n-6.

The health-giving effects and therapeutic benefits of these compounds are widely known, especially in treating and preventing cardiovascular disease, in preventing tumours and in treating immune-inflammatory conditions.

Since these compounds are hydrophobic, in order to improve their solubility and thereby bioavailability, their administration in the form of emulsions, microemulsions and nano-emulsions, typically of the oil in water type, is known.

Within the sphere of these forms administration it is therefore particularly important to make stable emulsions available in which the polyunsaturated active ingredients cited above are protected from oxidative phenomena.

A further relevant aspect is to make formulations having appropriate organoleptic characteristics available, especially as regards the palatability needed for administration to be acceptable to the patient.

The purpose of the present invention is therefore to provide a composition of a food supplement, in the form of an emulsion, to administer the aforesaid fatty acids Omega-3 and/or Omega-6 having improved characteristics, especially as regards the aforementioned aspects, compared to the prior compositions.

A further purpose of the invention is to provide an improved procedure for the preparation of the aforesaid compositions.

The present invention relates to a food supplement composition and to a procedure for making it, as defined in the appended claims, the content of which shall be understood as part of the technical teaching of the present description.

Where not otherwise indicated, the "parts" referred to in this description and in the claims are "parts in weight".

The composition of the supplement which the invention relates to has the advantage of being composed of a completely water-soluble oily phase regardless of the quantity of water used to dilute it, and of masking the flavour of the ingredients, having no aftertaste and being highly digestible without causing aerophagy. Furthermore, it can be used both in aqueous solution and in food preparations made from proteins, vitamins, mineral salts, lipids etc.

Within the sphere of the invention, glycerol - which is completely soluble in water and acts as a carrier-performs the critical role of improving dispersion, dampening the gums/cellulose which join the structure binding the oily phase and aqueous phase to ensure the homogeneity of the emulsion. The viscosity of the supplement and its solubility in water is thereby improved.

It is also essential that within the sphere of the invention water having a conductivity of < 2 µS/cm, obtained for example by filtration, is used. In fact, mains water contains a variety of oxidant substances which upon contact would irreparably degrade the ingredients, giving the supplement an unpleasant taste and rancid smell.

Preferably, the procedure which the invention relates to envisages a further final step of adding a preservative to the combined mixture, the aforesaid addition taking place at a temperature of 5 to 30°C, preferably 15 to 20°C.

The step of adding the second mixture to the first mixture is advantageously conducted in a turboemulsifier fitted with counter rotating blades and turbine, and operating at a pressure of not more than -0.2 bar, preferably not more than -0.5 bar.

Typically, the aforesaid step of adding may envisage a first sub-step wherein a fraction of 10 to 50% of the second mixture, preferably 25 to 35% of the second mixture, is added to the first mixture by making said blades rotate at a speed of 100 to 800 rpm, preferably 200 to 500 rpm, and said turbine at a speed of 200 to 2000 rpm, preferably 500 to 1000 rpm, and a second sub-step wherein the remaining fraction of the second mixture is added to the first mixture by making said blades rotate at a speed of 100 to 800 rpm, preferably 200 to 500 rpm and said turbine at a speed of 500 to 4000 rpm, preferably 1500 to 2500 rpm.

Advantageously, the aforesaid step of adding takes place continuously, the first sub-step has a duration of 1 to 5 minutes, preferably 2 to 3 minutes and the second sub-step has a duration of not more than 5 minutes.

In preferred embodiments of the invention, the omega-3 or omega-6 fatty aid is eicosapentaenoic acid (EPA) or docosahexaenoic acid (DHA) derived from animal or vegetable organisms, especially fishes and marine micro-algae, the flavouring incorporated in the second mixture is essential oil of orange and/or lemon and/or chocolate type flavourings, the sweetener added to the first mixture is fructose, sucrose or glucose syrup, the flavouring additive is orange juice and/or apple juice and/or flavourings made from cocoa powder, chocolate, vanilla, biscuit and fruity and creamy flavours in general and/or the sweetener added to the combined mixture is sucralose, which is particularly preferred, dextrose or mannitol. The cellulose of the first mixture could be for example hydroxyl cellulose, hydroxyl ethyl cellulose or carboxy ethyl cellulose and/or food cellulose in general.

According to one advantageous embodiment of the aforesaid procedure, the step of preparing the second mixture comprises a step of adding tocopherol. Such variant is for example illustrated in example 2.

Tocopherol is a natural anti-oxidant which enables the preservation of fatty acids for long periods of time in an unaltered state, and it has proven particularly effective for Omega-3 acids.

The long chain fatty acid is thereby assured of maintaining its bioavailability constant and unaltered in time, consequently ensuring unchanging efficacy of the product for the end user, regardless of the time elapsing between the preparation of the composition and administration of the same.

Two examples of the production process of a food supplement according to the invention are provided below by way of non-limiting examples.

### EXAMPLE 1

Such example refers to the production of approximately 100 grams of finished product.

Firstly 30.0 g of water (filtered with a terminal filter of 0.2 µm absolute and having a conductivity < 2 µS/cm) is heated to 60°C and the following components dissolved therein in this order:
4.0 g of glycerol,
0.2 g of tragacanth, and
0.2 g of acacia gum,
forming a first mixture which is then cooled to room temperature and to which 25.0 g of fructose syrup at 95% is added.

Separately, a second mixture is prepared by combining 6.0 g of an ethoxylated sorbitane ester (e.g. Montanox 80 DF made by Seppic or Polisorbato 80, or Tween 80) with the following components while stirring and at room temperature;
0.3 g of essential oil of orange, and
14.0 g of DHA from marine micro-algae,
so as to solubilise them completely and obtain a clear yellow-orange solution.

The second mixture is then added to the first mixture while stirring at a pressure of -0.5 bar (vacuum) in a turboemulsifier, to obtain a combined mixture wherein the oily phase is emulsified in an aqueous phase.

The following ingredients are then added to the combined mixture, operating at room temperature and in this order:
20.0 g of orange juice, and
0.03 g of sucralose.

### EXAMPLE 2

This example also refers to the production of approximately 100 grams of finished product.

Firstly 25.4 g of water (filtered with a terminal filter of 0.2 µm absolute and having a conductivity < 2 µS/cm) is heated to 60°C and the following components are dissolved therein in this order:
2.3 g of glycerol,
0.2 g of tragacanth, and
0.2 g of acacia gum,
forming a first mixture which is then cooled to room temperature and to which 30.0 g of fructose syrup at 95% is added.

Separately, a second mixture is prepared by combining 2.3 g of an ethoxylated sorbitane ester (e.g. Montanox 80 DF made by Seppic or Polisorbato 80, or Tween 80) with the following components, while stirring and at room temperature:
0.3 g of essential oil of orange,
3.0 g of DHA from marine micro-algae, and
0.3 g of tocopherol (Delta-tocoferolo, Cod. Biochim 251, made by Biochim S.r.l., Via Sarfatti, 3, Milano);
so as to solubilise them completely and obtain a clear yellow-orange solution.

The second mixture is then added to the first mixture while stirring at a pressure of -0.5 bar (vacuum) in a turboemulsifier, to obtain a combined mixture wherein the oily phase is emulsified in an aqueous phase.

The following ingredients are then added to the combined mixture, operating at room temperature and in this order:
20.0 g of orange juice;
8.00 g of apple juice;
4.00 g of rosa canina MG; and
4.00 g of olea europea MG.

Finally, a preservative composed of a mixture of potassium sorbate, sodium benzoate ad vitamin E is added, operating at room temperature and stirring.

Naturally, without prejudice to the principle of the invention, the details of embodiment and forms of implementation may vary widely from the description given purely by way of example, while remaining within the scope of the invention as defined by the appended claims.

## Claims

1. Production process of a food supplement, envisaging the steps of:
(i) preparing a first mixture by heating to a temperature of 50 to 70°C 100 parts of water having a conductivity of < 2 µS/cm, wherein the following components have been solubilised in this order:
from 0.1 to 10 parts of glycerol, and
0.01 to 5 parts of a further component chosen from among tragacanth, acacia gum, xanthan gum, cellulose of any type and their mixtures,
and subsequent cooling to room temperature of the first mixture, to which 0 to 75 parts of a sweetener are added;
(ii) separately preparing, at a temperature ranging from 15 to 35°C, a second mixture completely solubilising in 0.5 to 30 parts of an ethoxylated sorbitane ester:
from 0.001 to 5 parts of a flavouring, and
from 0.1 to 50 parts of an omega-3 or omega-6 fatty acid or their mixtures;
(iii) adding the second mixture to the first mixture, to obtain a combined mixture in which an oily phase is emulsified into an aqueous phase; and
(iv) adding to said combined mixture a flavouring additive in the order of 1 to 50 parts and 0.001 to 5 parts of a sweetener.

2. Procedure according to claim 1, envisaging a further final step of adding a preservative to the combined mixture, said addition taking place at a temperature of 5 to 30°C.

3. Procedure according to claim 1 or 2, wherein the step of adding the second mixture to the first mixture is permormed in a turboemulsifier fitted with counter rotating blades and turbine, and operating at a pressure of not more than -0.2 bar.

4. Procedure according to claim 3, wherein said step of adding envisages a first sub-step wherein a fraction of 10 to 50% of the second mixture is added to the first mixture by making said blades rotate at a speed of 100 to 800 rpm and said turbine at a speed of 200 to 2000 rpm, and a second sub-step wherein the remaining fraction of the second mixture is added to the first mixture by making said blades rotate at speed of 100 to 800 rpm and said turbine at a speed of 500 to 4000 rpm, said second sub-step having a duration of not more than 5 minutes.

5. Procedure according to claim 4, wherein said step of adding takes place continuously and the first sub-step has a duration of 1 to 5 minutes.

6. Procedure according to any of the previous claims, wherein said omega-3 or omega-6 fatty acid is eicosapentaenoic acid (EPA) or docosahexaenoic acid (DHA) derived from animal or vegetable organisms, especially fishes and marine micro-algae.

7. Procedure according to any of the previous claims, wherein said flavouring incorporated in the second mixture is orange essential oil.

8. Procedure according to any of the previous claims, wherein said sweetener added to the first mixture is fructose, sucrose or glucose syrup.

9. Procedure according to any of the previous claims, wherein the step of preparing the second mixture comprises a step of adding tocopherol.

10. Procedure according to any of the previous claims, wherein said sweetener added to the combined mixture is sucralose, dextrose or mannitol.

11. Composition used as a food supplement to administer an Omega-3 or Omega-6 polyunsaturated fatty acid, in the form of an emulsion, obtained by mixing:
(i) an oily phase comprising:
- said polyunsaturated Omega-3 or Omega-6 fatty acid or their mixtures;
- an emulsifier comprising an ethoxylated sorbitane ester, and
(ii) an aqueous phase comprising an emulsion stabiliser, **characterised in that** said emulsion stabiliser is chosen from xanthan gum, tragacanth, acacia gum, a chemically modified cellulose or their mixtures and **in that** said aqueous phase further comprises glycerol.

12. Composition according to claim 11, **characterised in that** said Omega-3 or Omega-6 polyunsaturated fatty acid is chosen from the group consisting of eicosapentaenoic acid (EPA), docosahexaenoic acid (DHA), derived from animal or vegetable organisms, especially fishes and marine micro-algae.

13. Composition according to claim 11 or 12, **characterised in that** it comprises a sweetener chosen from fructose syrup, sucrose syrup, glucose syrup, sucralose, dextrose, mannitol or their mixtures.

14. Composition according to any of the claims from 1 to 11, **characterised in that** it further comprisestocopherol.

15. Composition according to any of the claims from 11 to 14, obtainable by means of the procedure according to any of the claims 1 to 10.
